(19) Europäisches Patentamt
European Patent Office
Office européen des brevets

(11) **EP 1 988 197 A1**

(12) **EUROPEAN PATENT APPLICATION**
published in accordance with Art. 158(3) EPC

(43) Date of publication:
**05.11.2008 Bulletin 2008/45**

(51) Int Cl.:
***D04B 21/14*** (2006.01)  ***A47C 27/00*** (2006.01)

(21) Application number: **07714691.8**

(22) Date of filing: **21.02.2007**

(86) International application number:
**PCT/JP2007/053191**

(87) International publication number:
**WO 2007/097363 (30.08.2007 Gazette 2007/35)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.02.2006  JP 2006044987**

(71) Applicant: **Asahi Kasei Fibers Corporation Osaka-shi,
Osaka 530-8205 (JP)**

(72) Inventors:
• **IKENAGA, Hideo
Tokyo 100-8440 (JP)**
• **TANIGUCHI, Yukihito
Tokyo 100-8440 (JP)**

(74) Representative: **von Kreisler Selting Werner Patentanwälte
P.O. Box 10 22 41
50462 Köln (DE)**

(54) **STEREOSCOPIC KNITWORK**

(57)     A three-dimensional knit fabric comprising two knit layers consisting of a front layer and a back layer and monofilament yarns connecting the two knit layers, **characterized in that** the three-dimensional knit fabric has a thickness of 5 to 25 mm, the fabric undergoes a compression load of 100 to 250 N for compressive deformation of 2.6 mm on a 100-mm diameter compression plate, and the front and back knit layers undergo a shearing stress of 15 to 35 N to be shifted by 5 mm in parallel to each other in transverse opposite directions (directions along the course line).

FIG. 1

**Description**

TECHNICAL FIELD

The present invention relates to a three-dimensional knit fabric that is placed on a urethane cushion material of a vehicle seat, does not cause bottoming, prevents concentrated load, and provides an excellent vibration absorption property and stability against swaying when a user sits on the seat.

BACKGROUND ART

In recent years, a three-dimensional knit fabric comprising two knit layers consisting of a front layer and a back layer and a connecting yarn connecting the two knit layers to each other has been applied to seat materials and the like because the fabric works as a cushion material having features such as recyclability, air permeability, and a vibration absorption property in comparison with a urethane cushion material in which urethane foam is covered with a skin material.

In Patent Document 1, there is disclosed a three-dimensional knit fabric that shows a spring constant of 100 N/mm or less when the fabric is compressed with a 200 mm diameter compression plate under a load in the region of 250 N or higher, shows high spring constant in a load region less than the given region, whereby the fabric that is placed and extended with low elongation in a cushion layer having a sheet structure exhibits characteristics similar to muscles of human buttocks or the like, and exhibits high cushioning properties against imposition of large load.

However, the three-dimensional knit fabric disclosed in Patent Document 1 shows low spring constant under a load equivalent to what is imposed when a user sits on, whereby the fabric that is placed on a urethane cushion material tends to cause bottoming when a user sits thereon, and lacks a vibration absorption property due to the bottoming. Furthermore, the fabric has low shearing stress of its front and back knit layers, and thus the fabric lacks stability against swaying.

In Patent Document 2, there is disclosed a three-dimensional knit fabric sheet that exhibits excellent body pressure dispersion property and recovery by defining the gauge, and number of courses of a three-dimensional knit fabric, and the degree of fineness and arrangement density of its connecting yarn, thereby providing comfortable and fatigue-less sitting when the sheet is applied to a cushion sheet for seats such as an automobile seat.

However, the three-dimensional knit fabric disclosed in Patent Document 2 lacks a vibration absorption property and stability against swaying because the fabric is designed without enough consideration of spring constant under a load equivalent to what is imposed when a user sits on or shearing stress of the front and back knit layers.

Patent Document 1: JP-A-2003-342859
Patent Document 2: JP-A-2001-089959

DISCLOSURE OF THE INVENTION

Problems to be Solved by the Invention

The present invention relates to a three-dimensional knit fabric that does not cause bottoming, prevents concentrated load to ischium portion when a user sits thereon, and provides an excellent vibration absorption property and stability against swaying. In particular, an object of the present invention is to provide a three-dimensional knit fabric that exhibits excellent ride quality by inserting the fabric between a urethane cushion material and a skin material in a seat for a vehicle such as a car, a railway vehicle, a motorcycle, a wheel chair, or a baby carriage.

Means for Solving the Problems

In order to achieve the object, the present inventor has thoroughly examined in regard to spring constant of a three-dimensional knit fabric under a load equivalent to body weight in evaluating compression properties of the fabric, shear properties of a three-dimensional knit fabric, the structure of a three-dimensional knit fabric, and the constitution of a fiber material. As a result, the inventor has accomplished the present invention.

That is, the present invention is described as follows:

(1) A three-dimensional knit fabric comprising two knit layers consisting of a front layer and a back layer and monofilament yarns connecting the two knit layers, characterized in that the three-dimensional knit fabric has a thickness of 5 to 25 mm, the fabric undergoes a compression load of 100 to 250 N for compressive deformation of 2.6 mm with a 100-mm diameter compression plate, and the front and back knit layers undergo a shearing stress of 15 to 35 N to be shifted by 5 mm in transverse opposite directions (directions along the course line).

(2) The three-dimensional knit fabric according to (1), wherein at least one of the front and back knit layers is mesh-like, one mesh is formed from 2 to 6 courses, and a single continuous connecting yarn is incorporated between 2 courses to form a triangle shape in a sectional view of the knit layers taken along a course line.

(3) The three-dimensional knit fabric according to (2), wherein among the connecting yarns, a single continuous connecting yarn is positioned to form a combination of a triangle shape and a slant shape in the sectional view of the knit layers taken along the course line, and the number of the triangle shape and the slant shape is in the ratio of 3:1 to 1:3.

(4) The three-dimensional knit fabric according to (2) or (3), wherein at least a splicing yarn is incorporated into an opening of the mesh.

(5) The three-dimensional knit fabric according to any one of (1) to (4) for inserting between a urethane cushion material and a skin material of a vehicle seat.

Advantages of the Invention

The three-dimensional knit fabric according to the present invention is placed on a urethane cushion material of a vehicle seat. The fabric does not cause bottoming when a user sits on the seat, and prevents concentrated load to ischium portion by encompassing the ischium portion softly. And the fabric has hardness of proper spring constant, thereby having an excellent vibration absorption property of 15 to 40 Hz. Furthermore, because shearing load of the front and back knit layers is in a proper range, the fabric shows excellent stability against swaying, whereby the fabric that is placed on a urethane cushion material of a vehicle seat provides excellent ride quality.

BRIEF DESCRIPTION OF THE DRAWINGS

Fig. 1 illustrates how to obtain a compression load when a fabric undergoes compressive deformation of 2.6 mm with a 100 mm diameter compression plate; and
Fig. 2 illustrates how to measure shearing stress in the transverse direction.

BEST MODE FOR CARRYING OUT THE INVENTION

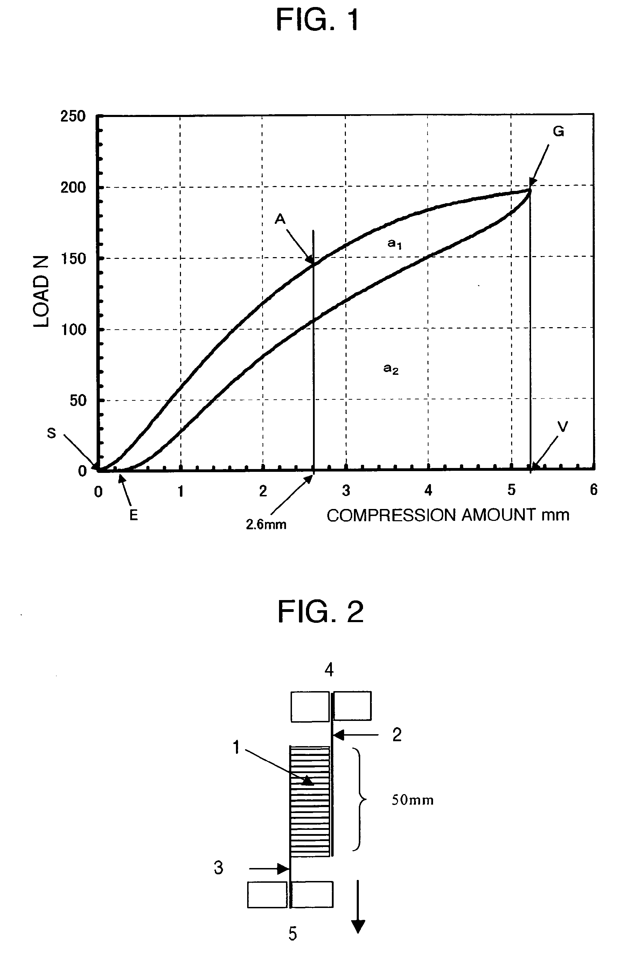

Hereinafter, the present invention will be described in more detail.
The three-dimensional knit fabric according to the present invention has features that the fabric does not cause bottoming when a person sits thereon, and enhances a vibration absorption property in the region of 15 to 40 Hz provided with a vehicle seat by using elasticity and hysteresis loss of the three-dimensional knit fabric. Therefore, it is required that the fabric undergoes a compression load of 100 to 250 N for compressive deformation of 2.6 mm with a 100-mm diameter compression plate, preferably 120 to 230 N, more preferably 120 to 200 N.
The compression load in compressive deformation of 2.6 mm with a 100-mm diameter compression plate is a value of load (N) when a three-dimensional knit fabric undergoes compressive deformation of 2.6 mm in a compression curve of a compression-recovery curve, which is obtained when the three-dimensional knit fabric is placed on a rigid surface, the fabric is compressed to 50% of its original thickness with a 100-mm diameter compression plate, and then the load is released (See Fig. 1).
The compression with a 100-mm diameter is equivalent to a compression under half of buttocks of a body. The compressive deformation of 2.6 mm is a proper amount for a three-dimensional knit fabric to be compressed and deformed when a person sits thereon.
And with the deformation amount, the fabric sufficiently absorbs vibration without causing bottoming. The amount was obtained empirically by the present inventor. The compression load less than 100 N in compressive deformation of 2.6 mm tends to cause bottoming of the three-dimensional knit fabric in the case of a person with heavy weight sitting thereon or imposing large load, whereby concentrated load is generated at ischium portion and cushioning properties are impaired. And the bottoming increases spring constant of the three-dimensional knit fabric, resonance frequency of the fabric being subjected to vibration shifts to higher frequency, thereby rendering the property of absorbing vibration of 15 to 40 Hz faulty.
The compression load of more than 250 N in compressive deformation of 2.6 mm renders the three-dimensional knit fabric too hard and tends to generate concentrated load at ischium portion, thereby providing uncomfortable sitting quality. And also, high spring constant as with the case of the bottoming shifts resonance frequency of the fabric being subjected to vibration to higher frequency, thereby rendering the property of absorbing vibration of 15 to 40 Hz faulty.
As for the three-dimensional knit fabric according to the present invention, in order to make a compression load 100 to 250 N in compressive deformation of 2.6 mm, it is necessary to adjust carefully requirements for designing the three-dimensional knit fabric such as materials and degree of fineness of monofilament used for a connecting yarn of the three-dimensional knit fabric, connection angle of the yarn when the yarn connects the front and back knit layers to each other, the number of the connecting yarn per unit area, thickness of the three-dimensional knit fabric, or heat-set temperature.

As for material used for monofilament of the connecting yarn, there may be used fibers such as polytrimethylene terephthalate fiber, polybutylene terephthalate fiber, polyethylene terephthalate fiber, polyamide fiber, polypropylene fiber, polylactate fiber, or polyester type elastomeric fiber. The polybutylene terephthalate fiber or the polytrimethylene terephthalate fiber is preferably used, more preferably the polytrimethylene terephthalate fiber in view of property recovering from repeated compression.

The degree of fineness of the connecting yarn is preferably 250 to 1000 dtex, more preferably 300 to 800 dtex, still more preferably 350 to 600 dtex. Furthermore, the number of the connecting yarn per unit area is preferably 150 to 600, more preferably 200 to 500 per 2.54 cm square. Incidentally, a connection angle of the yarn when the yarn connects the front and back knit layers to each other is preferably 45 to 80 degrees. The connection angle means acute angle which a ground structure forms with the connecting yarn in a sectional view of the three-dimensional knit fabric taken from the direction of knitting end.

Furthermore, the connecting yarn may form knitted loops in the front and back knit layers, or may be inserted or tucked to be hung on the front and back knit layers. But, it is preferable that at least two connecting yarns connect the front and back knit layers with each other while slanted in the opposite directions to each other so that a cross (X-shaped) or truss structure is formed for obtaining the form-retaining property of the three-dimensional knit fabric and excellent cushioning properties for a seat. In this case, both in the cross structure and truss structure, the connecting yarn may be composed of two connecting yarns, or only a single connecting yarn may return back from the front or back knit layer to the other layer as if the fabric were knitted using two yarns.

Furthermore, the three-dimensional knit fabric is required to have a thickness of 5 to 25 mm when the fabric is measured under a load of 0.5 g/cm$^2$ (49 Pa). When the fabric has a thickness of less than 5 mm, the fabric cannot bear the weight of a person without causing bottoming. When the fabric has a thickness of more than 25 mm, the three-dimensional fabric lacks handling properties such as heat-set processability, cutting properties, or ease of dealing with yarn waste at the ends thereof.

Further, how to conduct the heat set is extremely important to determine the structure of the connecting yarn and spring constant of the three-dimensional knit fabric. It is preferable that the width of the fabric is stretched by -15 to 20% in accordance with the material or the knit structure of the three-dimensional knit fabric, and the temperature of the heat-set is adjusted to be in the range of 140 to 200 degrees C.

As for the three-dimensional knit fabric according to the present invention, it is required that the front and back knit layers thereof undergo a shearing stress of 15 to 35 N to be shifted by 5 mm in parallel to each other in transverse opposite directions (directions along a course line), preferably 15 to 30 N, more preferably 20 to 30 N. When the shearing stress is less than 15 N, the fabric does not provide stability against swaying and tends to cause bottoming. When the shearing stress is more than 35 N, the fabric is too hard and seems like a plate.

In order to make the shearing stress 15 to 35 N, the structure of the connecting yarn is important. For increasing the shearing stress, a single continuous connecting yarn is preferably incorporated between 2 courses to form a triangle shape in a sectional view of the knit layers taken along a course line to connect the front and back knit layers to each other. As for the triangle shape, two sides thereof are formed by the single continuous connecting yarn, and the other side is formed by the front or back knit layer. And then, this structure looks like a triangle. More specifically, for example knitting is conducted from the front knit layer to the back knit layer with slanting the connecting yarn to the left side, and then knitting is conducted from the back knit layer to the front knit layer with slanting the connecting yarn to the left side.

The knitting method of making a connecting yarn a triangle shape is effective particularly when at least one of the front and back knit layers is mesh-like, and use of the method increases the shearing stress of the mesh knit layer. When the connecting yarn is knitted to form the triangle shape as described above, each knitted loop of the connecting yarn forming the apex of the triangle is preferably a closed loop, whereby the knitted loop at the apex becomes tight and a structure having stability against shearing is obtained.

Furthermore, when at least one of the front and back knit layers is mesh-like, for the purpose of stabilizing the mesh form, a single continuous connecting yarn is composed of a combination of a portion of forming a triangle shape and a slant portion that does not form a triangle shape. In this case, it is more preferable that the number of connecting yarns forming the triangle shape and the slant shape is in the ratio of 3:1 to 1:3, and still more preferable 2:1 to 1:2. When the number of the triangle shape is more than the ratio of 3:1, it becomes difficult to knit the connecting yarns with tracking the mesh form, and monofilaments of the connecting yarns tend to stick out of the surface of the mesh knit layer. On the other hand, when the number of the triangle shape is less than the ratio of 1:3, it becomes difficult to increase the shearing stress of the front and back knit layers. Incidentally, the portion in which connecting yarns are slanted means that, for example, knitting is conducted from the front knit layer to the back knit layer with slanting the connecting yarn to the left side, and then knitting is conducted from the back knit layer to the front knit layer with slanting the connecting yarn to the right side. That is, the portion means the state that the connecting yarns do not form a triangle shape between 2 courses.

Incidentally, the knit structure of the front and back knit layers is preferably knit to the same overlapped direction as the direction of the connecting yarns being hooked to a needle to tighten knitted loops.

In the case of using a mesh knit layer for at least one of the front and back knit layers, in order to increase the shearing stress of the front and back knit layers, one mesh is preferably formed from 2 to 6 courses, more preferably 2 to 4 courses. When one mesh is formed from more than 6 courses, resulting mesh knitted loops tend to move and become unstable, which decreases the shearing stress.

For the purpose of enhancing stability of the form of the mesh knit layer, and increasing the shearing stress, at least one or more splicing yarn is preferably incorporated into an opening of the mesh knit layer. As for a method for incorporating the splicing yarn, there may be used a method for incorporating a yarn to form a mesh so that the yarn crosses the opening of the mesh, or an inlaid yarn is incorporated into the mesh knit layer to cross the opening of the mesh.

Furthermore, in order to increase the shearing stress of the front and back knit layers, it is preferable to increase the space-filling fiber rates of the front and back knit layers and to use multifilament fiber with 350 to 2000 dtex for the front and back knit layers to sufficiently fix knitted loops in which connecting yarns are incorporated in the front and back knit layers.

In a mesh structure having low space-filling fiber rates of the front and back knit layers or a three-dimensional knit fabric in which front and back fibers do not fix connecting yarns sufficiently, shearing stress becomes too small. On the other hand, too high degree of fineness or space-filling fiber rates of the front and back knit layers provides a three-dimensional knit fabric having hard front and back ground structure and that seems like a wooden plate.

The space-filling fiber rate of the front or back knit layer represents a percent occupancy given by fibers comprising the front or back knit layer and connecting yarns knitted thereinto of a three-dimensional knit fabric per a unit area covered by the front or back side. A preferred space-filling fiber rate in both the front and back knit layers is 35 to 100%. The space-filling fiber rates of the front and back knit layers are obtained by taking closeup pictures under a magnification of 5 to 20 times of the front or back knit layers from a direction perpendicular to the surface of the layers to obtain a picture (or a copy of the taken picture) measuring 10 cm per side, and based on the picture (or the copy) calculating a percent areal occupancy of the ground structure (containing connecting yarns) of the front or back knit layers.

Furthermore, as for the three-dimensional knit fabric according to the present invention, for the purpose of further reducing concentrated load to ischium portion when a person sits thereon, a ratio of P1 and P2 (P1/P2) is preferably 1.0 to 2.0, wherein P1 is stress per unit area when the three-dimensional knit fabric is compressed by 3 mm from the front side with a 30-mm diameter compression plate; P2 is stress per unit area when the three-dimensional knit fabric is compressed by 3 mm from the front side with a 200-mm diameter compression plate; and P1 and P2 are measured in accordance with Example (a) and only the compression plates are switched in P1 and P2.

In a vehicle seat, in order to bear the weight of a person and provide sitting quality with stability, exhibiting a moderately high stress against compression in a broad area is preferable, but it is necessary to prevent pressure from concentrating at a protrusion of ischium portion by a fabric easily changing its shape in consonance with the protrusion. For this reason, the three-dimensional knit fabric preferably does not exhibit too high stress against compression in small area, and preferably $1.0 \leq P1/P2 \leq 2.0$.

In order to keep a three-dimensional knit fabric from having too high stress against compression in small area, the knit structure of the front knit layer of the three-dimensional knit fabric is made at a shogging width of two needles or less, whereby the front knit layer softens.

More preferably, a mesh knit layer is preferably used for the front knit layer of three-dimensional knit fabric for the purpose of decreasing compression stress in small area. However, increasing too much the number of courses that form the mesh knit layer decreases shearing stress as mentioned above. Therefore, one mesh is preferably formed from 2 to 6 courses.

The three-dimensional knit fabric according to the present invention preferably has a hysteresis loss rate of 5 to 50%. The hysteresis loss rate is obtained from a compression-recovery curve in which the fabric is compressed to 50% of its original thickness with a 100-mm diameter compression plate. The fabric having a hysteresis loss rate of less than 5% lacks vibration absorption properties. The fabric having a hysteresis loss rate of more than 50% lacks properties recovering from repeated compression.

The three-dimensional knit fabric according to the present invention can be knit by a knitting machine having double needle beds disposed opposite to each other, such as a warp knitting machine, a circular knitting machine or a flat knitting machine. The gauge of the knitting machine is preferably in the range of from 9 to 14 gauge.

As for a fiber used for the front or back knit layer of the three-dimensional knit fabric, the following fibers are preferably used because of high recyclability: polyester type fiber including polyethylene terephthalate fiber, polytrimethylene terephthalate fiber or polybutylene terephthalate fiber; polypropylene type fiber; polylactate fiber and the like. Furthermore, into the fiber used for the front or back knit layer is preferably incorporated a fire retardant additive such as phosphoric acid type or brom type for the purpose of meeting the standards of fire retardant properties required for vehicle seats.

The cross-section of the fiber may be circular, polygonal shape such as triangular, an L-shape, a T-shape, a Y-shape, a W-shape, octofoil, flat, a dog-bone shape, a multifoil shape, a hollow shape or an indefinite shape.

The form of the fiber may be an original yarn or any bulky textured yarn such as a spun yarn, a twisted yarn, a false-twist textured yarn, an air entangled yarn or a fluid jet textured yarn. In order to sufficiently cover a monofilament connecting yarn so as for the yarn not to be exposed out of the surface of the knit layer, a bulky yarn such as false-twist textured multifilament yarn or spun multifilament yarn is preferably used.

Furthermore, in order to prevent unpleasant sound generated due to the rubbing of the connecting yarns when the three-dimensional knit fabric is compressed, both a monofilament yarn and a multifilament yarn are preferably used for the connecting yarn by knitting the yarns mixedly, combing the yarns, or the like to use the multifilament yarn as an absorbing material.

The basis weight of the three-dimensional knit fabric according to the present invention may be optionally selected, but the basis weight is preferably in the range from 500 to 2000 g/m$^2$, more preferably from 600 to 1500 g/m$^2$.

When the three-dimensional knit fabric is formed of a yarn-dyed yarn or a dope-dyed yarn, the fabric can be finished through processes such as the process for scouring and heat-setting a grey fabric. When a three-dimensional knit fabric is formed of a non-colored yarn which used either as a connecting yarn or for front and back knit layer, a grey fabric may be finished through processes such as presetting, scouring, dyeing and heat-setting processes. The final heat-set, which is important for controlling the hardness of the three-dimensional knit fabric, is preferably conducted with adjusting the angle of the connecting yarn by stretching the width of the fabric with a heat setter. Furthermore, for the purpose of enhancing fire retardant properties, a fire retardant additive is preferably applied.

The three-dimensional knit fabric is placed on a urethane cushion material of a vehicle seat, and effectively exhibits excellent vibration absorption properties and stability against swaying. The three-dimensional knit fabric may be used as an outermost surface of the seat also serving as a skin material to provide excellent air permeability and effectively prevent stuffy feeling. However, the three-dimensional knit fabric is preferably inserted between a urethane cushion material and a skin material in order to provide freedom of design or feeling of the surface of a vehicle seat. When the three-dimensional knit fabric is inserted between a urethane cushion material and a skin material, the fabric is preferably cut by a method such as punching or laser cutting, and then inserted. At this moment, by utilizing air permeability of the three-dimensional knit fabric and air is actively circulated through the three-dimensional knit fabric, whereby air-conditioning function is imparted to the seat.

When the three-dimensional knit fabric is placed on a urethane cushion material, the fabric is preferably used with being bonded to the urethane cushion material. However, the fabric may be used without being bonded.

EXAMPLES

Hereinafter, the present invention will be more concretely described with reference to examples and the like. It should be noted, however, that the present invention is not limited to the examples described herein.

Physical properties of the three-dimensional knit fabric according to the present invention are measured as follows:

(a) Compression Load in Compressive Deformation by 2.6 mm with 100 mm Diameter Compression Plate

By using the Shimadzu autograph AG-B type (manufactured by SHIMADZU CORPORATION), a 20-cm square piece of the three-dimensional knit fabric placed on a rigid surface is compressed with a 100-mm diameter compression plate to 50% of its original thickness at a speed of 10 mm/min, and immediately after that, the compression is released at a speed of 10 mm/min. Among thus-obtained compression-recovery curve shown in Fig. 1, from a compression curve, a load (N) at a point (A) when the fabric undergoes compressive deformation by 2.6 mm is obtained. The value of the load is obtained by averaging measurements of 3 samples. Furthermore, hysteresis loss ratio H (%) is calculated by the following equation, in the compression-recovery curve, when an area $a_1$ (cm$^2$) is defined by the compression curve SG and the recovery curve GE, and an area $a_2$ (cm$^2$) is defined by the recovery curve GE, the straight line GV and the straight line SV. The value of the hysteresis loss ratio is obtained by averaging measurements of 3 samples. When the three-dimensional knit fabric has a thickness of less than 5.2 mm and compression load in compressive deformation by 2.6 mm cannot be measured by the above-mentioned method, the fabric is recovered from compression to a point (A) of compressive deformation by 2.6 mm, not to the thickness of 50% of its original thickness, and then compression load and hysteresis loss rate are measured.

$$H\ (\%)\ =\ a_1/(a_1\ +\ a_2)\ \times\ 100$$

(b) Shearing Stress in Transverse Direction (Direction Along Course Line)
By using TENSILON tensile testing instrument UTM-3L-A (manufactured by A&D Company, Ltd.), the transverse direction (direction along the course line) of a 5-cm square piece of the three-dimensional knit fabric is defined as a side that is subjected to tension. And as shown in Fig. 2, to both the front and back sides of the three-dimensional knit fabric 1 are fixed aluminum plates 2 and 3 with a width of 5 cm, a length of 8 cm, and a thickness of 1 mm with two-sided tape Nicetack NW-50 (manufactured by NICHIBAN CO., LTD.), and the upper chuck 4 and the lower chuck 5 are set to have a distance of 60 mm therebetween. Then the fabric is sheared by 5 mm at a tension speed of 50 mm/min to measure shearing stress (N) in the transverse direction (direction along the course line). The value of the shearing stress is obtained by averaging measurements of 3 samples.

(c) Vibration absorption Property
By using Vibration Testing System F-600BM/A-type manufactured by EMIC CORPORATION (a rigid plate on which samples are placed is attached to vibrating section), a 40-cm square piece of the three-dimensional knit fabric is placed on the rigid plate on which samples are placed. Furthermore, on the three-dimensional knit fabric is placed a 60-kg cylindrical metal weight of 200-mm diameter. To the three-dimensional knit fabric is imposed vibration of a sine wave at an acceleration of 0.1 G on a frequency of from 3 to 40 Hz. Acceleration is measured with acceleration pickups that are fixed on the weight on the three-dimensional knit fabric and on the rigid plate on which samples are placed, and acceleration transfer ratio on each frequency is calculated with the following formula.

$$\text{Transfer Ratio (dB)} = 20 \log_{10} (G_1/G_0)$$

In the formula, $G_1$: Acceleration in the upper portion of the Weight; and
$G_0$: Acceleration on the rigid plate on which samples are placed.

(d) Bottoming Feel at Seat, Presence or Absence of Concentrated Load to Ischium Portion, and Stability against Swaying
On a folding chair having a seat with a width of 40 cm, a depth of 40 cm, and a height of 32 cm is placed urethane foam with a width of 40 cm, a depth of 40 cm, a thickness of 10 cm, and a density of 0.036 g/cm$^3$. On the urethane foam is placed a 40-cm square piece of the three-dimensional knit fabric. A man of 65 kg weight sits on the seat for 5 minutes, and then he sways his upper part of the body to sides for 10 seconds to conduct sensory evaluation of bottoming feel and stability against swaying of the three-dimensional knit fabric in accordance with the following standards.

Bottoming Feel of Three-dimensional knit fabric ◎ (excellent): no bottoming feel, ○ (good): almost no bottoming feel, △ (acceptable): somewhat bottoming, × (unacceptable): severe bottoming.
Presence or Absence of Concentrated Load to Ischium Portion ◎ (excellent): no feel of concentrated load, ○ (good): almost no feel of concentrated load, △ (acceptable): some feel of concentrated load and wooden plate-like, × (unacceptable): severe feel of concentrated load and wooden plate-like.
Stability against Swaying ◎ (excellent): no bottoming and sitting with stability without lateral shift, ○ (good): almost no bottoming and sitting without lateral shift, △ (acceptable): sitting with some lateral shift and unstable or somewhat bottoming, × (unacceptable): sitting with severe lateral shift and unstable or severe bottoming.

EXAMPLE 1

In a double raschel knitting machine having six guide bars of 14 gauge with a bed gap of 14.2 mm, polyethylene terephthalate false-twist textured yarns of 500 dtex/144 filaments arranged in a one-in and one-out manner (L1); and in a one-out and one-in manner (L2) were supplied from two guide bars (L1 and L2) for knitting a front knit layer; polytrimethylene terephthalate monofilaments (manufactured by SOLOTEX corporation) of 440 dtex arranged in a one-in and one-out manner (L3); and in a one-out and one-in manner (L4) were supplied from two guide bars (L3 and L4) for forming a connecting portion; furthermore, polyethylene terephthalate false-twist textured yarns of 500 dtex/144 filaments arranged in an "all-in" manner were supplied from a guide bar (L5) for knitting a back knit layer; and from the other guide bar (L6), polytrimethylene terephthalate monofilaments (manufactured by SOLOTEX corporation) of 440 dtex arranged in an "all-in" manner were supplied.

A grey fabric for a three-dimensional knit fabric was knit in accordance with the knit structure described below at a knitting density of 12.8 courses/2.54 cm, and the resulting grey fabric was subjected to dry heat-set while stretching the width by 4%, at an overfeed ratio of 0%, at 160 degree C for 2 minutes and 30 seconds to obtain a three-dimensional knit fabric with 15.2 courses/2.54 cm, 14.2 wales/2.54 cm, a thickness of 10.5 mm in which a part of a single continuous connecting yarn formed a triangle shape with a base of the front knit layer, the number of connecting yarns forming the triangle shape and the slant shape was in the ratio of 1:1, and a splicing yarn was incorporated into an opening of the mesh of the front knit layer. Various physical properties of the resultant three-dimensional knit fabric are shown in Table 1.

(Knit Structure)

L1: 1011/1233/4544/4322//(one-in and one-out)
L2: 4544/4322/1011/1233//(one-out and one-in)
L3: 1023/1032/4532/4523//(one-in and one-out)
L4: 4532/4523/1023/1032//(one-out and one-in)
L5: 0001/1110//(all-in)
L6: 2245/3310//(all-in)

EXAMPLE 2

A grey fabric of a three-dimensional knit fabric was knit as with EXAMPLE 1 except that polybutylene terephthalate monofilaments of 440 dtex were supplied from two guide bars (L3 and L4) for forming a connecting portion. The resulting grey fabric was subjected to dry heat-set while stretching the width by 4%, at an overfeed ratio of 1%, at 170 degree C for 2 minutes and 30 seconds to obtain a three-dimensional knit fabric with 15.5 courses/2.54 cm, 14.2 wales/ 2.54 cm, and a thickness of 10.5 mm in which a part of a single continuous connecting yarn formed a triangle shape with a base of the front knit layer, the number of connecting yarns forming the triangle shape and the slant shape was in the ratio of 1:1, and a splicing yarn was incorporated into an opening of the mesh of the front knit layer. Various physical properties of the resultant three-dimensional knit fabric are shown in Table 1.

EXAMPLE 3

A grey fabric of a three-dimensional knit fabric was knit as with EXAMPLE 1 except that polyethylene terephthalate monofilaments of 440 dtex were supplied from two guide bars (L3 and L4) for forming a connecting portion and the knitting density was 12.0 courses/2.54 cm. The resulting grey fabric was subjected to dry heat-set while stretching the width by 6%, at an overfeed ratio of 1%, at 155 degree C for 2 minutes and 30 seconds to obtain a three-dimensional knit fabric with 14.5 courses/2.54 cm, 14.0 wales/2.54 cm, and a thickness of 10.4 mm in which a part of a single continuous connecting yarn formed a triangle shape with a base of the front knit layer, the number of connecting yarns forming the triangle shape and the slant shape was in the ratio of 1:1, and a splicing yarn was incorporated into an opening of the mesh of the front knit layer. Various physical properties of the resultant three-dimensional knit fabric are shown in Table 1.

COMPARATIVE EXAMPLE 1

A grey fabric of a three-dimensional knit fabric was knit as with EXAMPLE 1 except that polytrimethylene terephthalate monofilaments of 220 dtex were supplied from two guide bars (L3 and L4) for forming a connecting portion. The resulting grey fabric was subjected to dry heat-set while stretching the width by 4%, at an overfeed ratio of 1%, at 170 degree C for 2 minutes and 30 seconds to obtain a three-dimensional knit fabric with 15.5 courses/2.54 cm, 14.1 wales/2.54 cm, and a thickness of 10.3 mm in which a part of a connecting yarn formed a triangle shape with a base of the back knit layer. Various physical properties of the resultant three-dimensional knit fabric are shown in Table 1.

The three-dimensional knit fabric had too low compression load in compressive deformation by 2.6 mm and shearing stress, whereby the fabric had high resonance frequency, had high vibration transfer ratio, and every property of bottoming feel, concentrated load to ischium portion, and stability against swaying was faulty.

COMPARATIVE EXAMPLE 2

A grey fabric of a three-dimensional knit fabric was knit as with EXAMPLE 1 except that the following structures were formed for two guide bars (L3 and L4), respectively, to form a connecting portion. The resulting grey fabric was subjected to dry heat-set while stretching the width by 4%, at an overfeed ratio of 1%, at 170 degree C for 2 minutes and 30 seconds to obtain a three-dimensional knit fabric with 15.6 courses/2.54 cm, 14.0 wales/2.54 cm, and a thickness of 10.3 mm in which a connecting yarn formed a simple cross structure. Various physical properties of the resultant three-dimensional knit fabric are shown in Table 1.

L3:    1012//(one-in and one-out)
L4:    1210//(one-out and one-in)

The three-dimensional knit fabric had proper compression load in compressive deformation by 2.6 mm, but had too low shearing stress, whereby connecting yarns tended to collapse, and bottoming feel and stability against swaying were faulty.

COMPARATIVE EXAMPLE 3

A grey fabric of a three-dimensional knit fabric was knit as with EXAMPLE 1 except that a double raschel knitting machine having six guide bars of 9 gauge with a bed gap of 13 mm was used, polyethylene terephthalate monofilaments of 1100 dtex were supplied from two guide bars (L3 and L4) for forming a connecting portion and the knitting density was 10.5 courses/2.54 cm. The resulting grey fabric was subjected to dry heat-set while stretching the width by 6%, at an overfeed ratio of 1%, at 170 degree C for 2 minutes and 30 seconds to obtain a three-dimensional knit fabric with 12.0 courses/2.54 cm, 9.0 wales/2.54 cm, and a thickness of 10.3 mm in which a part of a connecting yarn formed a triangle shape with a base of the front knit layer. Various physical properties of the resultant three-dimensional knit fabric are shown in Table 1.

The three-dimensional knit fabric had too high compression load in compressive deformation by 2.6 mm, whereby the fabric had high resonance frequency, had high vibration transfer ratio, and bottoming feel and concentrated load to ischium portion were faulty.

COMPARATIVE EXAMPLE 4

In a double raschel knitting machine having six guide bars of 18 gauge with a bed gap of 6 mm, polyethylene terephthalate false-twist textured yarns of 167 dtex/48 filaments arranged in an "all-in" manner were supplied from two guide bars (L1 and L2) for knitting a front knit layer; polytrimethylene terephthalate monofilaments (manufactured by SOLOTEX corporation) of 200 dtex arranged in an "all-in" manner were supplied from two guide bars (L3) for forming a connecting portion; furthermore, polyethylene terephthalate false-twist textured yarns of 167 dtex/48 filaments arranged in an "all-in" manner were supplied from two guide bars (L4 and L5) for knitting a back knit layer.

A grey fabric of a three-dimensional knit fabric was knit in accordance with the (knit structure) described below at a knitting density of 18 courses/2.54 cm, and the resulting grey fabric was subjected to dry heat-set while stretching the width by 4%, at overfeed ratio of 0%, at 160 degree C for 2 minutes and 30 seconds to obtain a three-dimensional knit fabric with 20.4 courses/2.54 cm, 18.0 wales/2.54 cm, and a thickness of 4.5 mm in which every connecting yarn formed a triangle shape with a base of the front knit layer. Various physical properties of the resultant three-dimensional knit fabric are shown in Table 1. Incidentally, both compression load in compressive deformation by 2.6 mm and hysteresis loss ratio at recovering from compression to 50% were obtained from a compression-release curve in which the three-dimensional knit fabric was compressed by 2.6 mm and released.

(Knit Structure)

L1:    2322/1011/
L2:    1011/2322/
L3:    3410/4367/
L5:    1110/0001/
L6:    2210/2234/

The three-dimensional knit fabric had proper compression load in compressive deformation by 2.6 mm and shearing stress. However, the fabric was too thin and tended to cause bottoming, whereby the fabric had high resonance frequency, and bottoming feel and concentrated load to ischium portion were faulty.

[Table 1]

Table 1

| Item | | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 | COMPARATIVE EXAMPLE 4 |
|---|---|---|---|---|---|---|---|---|
| Thickness (mm) of Three-dimensional knit fabric | | 10.5 | 10.5 | 10.4 | 10.3 | 10.5 | 10.3 | 4.5 |
| Compression Load (N) in Compressive Deformation by 2.6 mm | | 152 | 143 | 238 | 85 | 140 | 280 | 150 |
| Hysteresis Loss Ration (%) in Recovery from Compression to 50% | | 21 | 42 | 54 | 23 | 45 | 55 | 33 |
| P1/P2 | | 1.5 | 1.6 | 1.8 | 1.3 | 1.4 | 1.6 | 2.2 |
| Shearing Stress (N) | | 26.9 | 24.2 | 28.5 | 13 | 13 | 39 | 24 |
| Space-Filling Fiber Rate (%) | Front | 70 | 71 | 68 | 67 | 71 | 67 | 100 |
| | Back | 85 | 85 | 83 | 84 | 85 | 80 | 98 |
| Resonance Frequency (Hz) | | 11.2 | 10.8 | 12.5 | 31.2 | 10.2 | 25.6 | 35.8 |
| Vibration Transfer Ratio (dB) | 20 Hz | 2.5 | 2.2 | 3.6 | 8.5 | 2.2 | 10.8 | 7.3 |
| | 30 Hz | -3.3 | -4 | -1.4 | 10.8 | -3 | 7.2 | 11.4 |
| Bottoming Feel | | ◎ | ○ | ◎ | △ | △ | △ | × |
| Presence or Absence of Concentrated Load to Ischium Portion | | ◎ | ○ | ○ | △ | ○ | × | × |
| Stability against Swaying | | ◎ | ○ | ◎ | △ | × | ○ | △ |

**EP 1 988 197 A1**

INDUSTRIAL APPLICABILITY

The three-dimensional knit fabric according to the present invention does not cause bottoming, prevents concentrated load to ischium portion when a person sits on, and provides an excellent vibration absorption property and stability against swaying. In particular, the three-dimensional knit fabric exhibits excellent ride quality by inserting the fabric between a urethane cushion material and a skin material in a seat for a vehicle such as a car, a railway vehicle, a motorcycle, a wheel chair, or a baby carriage.

**Claims**

1. A three-dimensional knit fabric comprising two knit layers consisting of a front layer and a back layer and monofilament yarns connecting the two knit layers, **characterized in that** the three-dimensional knit fabric has a thickness of 5 to 25 mm, the fabric undergoes a compression load of 100 to 250 N for compressive deformation of 2.6 mm with a 100 mm-diameter compression plate, and the front and back knit layers undergo a shearing stress of 15 to 35 N to be shifted by 5 mm in parallel to each other in transverse opposite directions (directions along a course line).

2. The three-dimensional knit fabric according to claim 1, wherein at least one of the front and back knit layers is mesh-like, one mesh is formed from 2 to 6 courses, and a single continuous connecting yarn is incorporated between 2 courses to form a triangle shape in a sectional view of the knit layers taken along a course line.

3. The three-dimensional knit fabric according to claim 2, wherein among the connecting yarns, a single continuous connecting yarn is positioned to form a combination of a triangle shape and a slant shape in the sectional view of the knit layers taken along the course line, and the number of the triangle shape and the slant shape is in the ratio of 3:1 to 1:3.

4. The three-dimensional knit fabric according to any one of claim 2 or 3, wherein at least a splicing yarn is incorporated into an opening of the mesh.

5. The three-dimensional knit fabric according to any one of claims 1 to 4 for inserting between a urethane cushion material and a skin material of a vehicle seat.

# FIG. 1

# FIG. 2

<table>
<tr><td colspan="2"><b>INTERNATIONAL SEARCH REPORT</b></td><td colspan="2">International application No.<br><br>PCT/JP2007/053191</td></tr>
</table>

A. CLASSIFICATION OF SUBJECT MATTER
*D04B21/14(2006.01)i, A47C27/00(2006.01)i*

According to International Patent Classification (IPC) or to both national classification and IPC

B. FIELDS SEARCHED

Minimum documentation searched (classification system followed by classification symbols)
D04B21/14, A47C27/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-190211 A  (Asahi Kasei Fibers Corp.),<br>08 July, 2004 (08.07.04),<br>Claims; Par. Nos. [0006], [0016], [0034]<br>(Family: none) | 1-5 |
| Y | JP 2006-207 A  (Delta Tooling Co., Ltd., Asahi Kasei Fibers Corp.),<br>05 January, 2006 (05.01.06),<br>Claims; Par. No. [0021]<br>(Family: none) | 1-5 |
| Y | WO 2002/079558 A1  (Asahi Kasei Fibers Corp.),<br>10 October, 2002 (10.10.02),<br>Claims<br>& US 2003/0033838 A1   & EP 1426473 A1 | 4,5 |

☒  Further documents are listed in the continuation of Box C.          ☐   See patent family annex.

| | |
|---|---|
| * Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>15 May, 2007 (15.05.07) | Date of mailing of the international search report<br>29 May, 2007 (29.05.07) |
|---|---|
| Name and mailing address of the ISA/<br>    Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/053191 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2006-2274 A  (Asahi Kasei Fibers Corp.),<br>05 January, 2006 (05.01.06),<br>Claims; Par. Nos. [0028], [0031]<br>(Family: none) | 3-5 |
| A | JP 2003-342859 A  (Delta Tooling Co., Ltd.,<br>Asahi Kasei Fibers Corp.),<br>03 December, 2003 (03.12.03),<br>Full text<br>(Family: none) | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003342859 A

- JP 2001089959 A